# EUROPÄISCHE PATENTSCHRIFT

(11) **EP 3 891 006 B1**
(45) Veröffentlichungstag und Bekanntmachung des Hinweises auf die Patenterteilung: **21.12.2022**
(21) Anmeldenummer: 19794959.7
(22) Anmeldetag: 23.10.2019
(51) Int. Cl.: B60K 37/06, B60R 16/037, G06F 3/16

(54) **VERFAHREN UND VORRICHTUNG ZUR EINSTELLUNG EINER FAHRZEUGKOMPONENTE**
METHOD AND DEVICE FOR ADJUSTING A VEHICLE COMPONENT
PROCÉDÉ ET DISPOSITIF POUR AJUSTER UN COMPOSANT DE VÉHICULE

(30) Priorität: 03.12.2018 DE 102018009487
(43) Veröffentlichungstag der Anmeldung: 13.10.2021
(73) Patentinhaber: Mercedes-Benz Group AG, 70372 Stuttgart (DE)
(72) Erfinder: HEISTERKAMP, Paul, 89155 Erbach (DE); BADER, Klaus, 89610 Oberdischingen (DE); LUFT, Andreas, 70567 Möhringen (DE); MÖLLER, Carsten-Uwe, 75389 Neuweiler (DE); REH, Frank, 71701 Schwieberdingen (DE); SCHUESSEL, Felix, 70188 Stuttgart (DE)
(74) Vertreter: JENSEN & SON
(86) Internationale Anmeldenummer: PCT/EP2019/078903
(87) Internationale Veröffentlichungsnummer: WO 2020/114669

(56) Entgegenhaltungen:
- DE-A1- 10 121 392
- DE-A1-102016 205 797
- DE-A1-102017 101 669
- US-A1- 2005 134 117

## Beschreibung

Die vorliegende Erfindung betrifft ein Verfahren und eine Vorrichtung zur Einstellung einer Fahrzeugkomponente.

Aus der DE 10229841 A1 ist ein Bedienelement zur Einstellung von Fahrzeugspiegeln bekannt. Mittels einem Schalter kann wahlweise entweder der rechte oder der linke Außenspiegel zur Verstellung ausgewählt werden. Die eigentliche Spiegeleinstellung erfolgt mit einem als 4-Wegetaste ausgebildeten Bedienelement, das eine Spiegeleinstellung in zwei Ebenen ermöglicht.

DE 10 2017 101669 A1 offenbart ein Verfahren zum Betreiben einer Mensch-Maschine-Schnittstelle für ein Fahrzeug, mit einer an einem Fahrzeugbauteil vorgesehenen berührungsempfindlichen Oberfläche und einer Steuereinheit, wobei in einem ersten Schritt eine Berührung an einem beliebigen Berührungspunkt der berührungsempfindlichen Oberfläche erkannt wird. In einem weiteren Schritt wird dem Berührungspunkt eine Schaltfläche zugeordnet, über die eine der Schaltfläche zugeordnete Funktion ausführbar ist.

DE 101 21 392 A1 offenbart eine Vorrichtung zur Steuerung von Geraten mittels einer Blickrichtung, wobei mittels der Blickrichtung eine Steuerfunktion ausgewählt und mittels eines haptischen Bedienelements, das vorzugsweise an einem Lenkrad angeordnet ist, die ausgewählte Steuerfunktion ausgeführt wird.

Die DE 10 2016 205797 A1 offenbart ein Verfahren, bei dem unter Verwendung einer Bedienhandlung, die einen Blick eines Insassen eines Fahrzeugs auf eine zu steuernde Einrichtung des Fahrzeugs repräsentiert, Steuerbefehle zumindest einer ersten und/oder einer zweiten Steuereinrichtung des Fahrzeugs der zu steuernden Einrichtung zugeordnet werden können.

Nachteilig ist, dass die Steuerung auf die von der Bedienhandlung erfasste Einrichtung beschränkt ist, wodurch die Steuerung einer Einrichtung an einer dem die Bedienhandlung ausführenden Insassen zugehörigen Sitzposition mittels einer einen für mehrere Sitzpositionen zutreffenden Bedienhandlung nicht möglich ist.

Es ist demgemäß die Aufgabe der vorliegenden Erfindung, ein verbessertes Verfahren und eine Vorrichtung zur vereinfachten Einstellung von verschiedenen Fahrzeugkomponenten mit einem Bedienelement zur Verfügung zu stellen.

Die Aufgabe wird durch ein Verfahren mit den Merkmalen des Anspruchs 1 und einer Vorrichtung mit den in Anspruch 8 angegebenen Merkmalen gelöst.

Weitere vorteilhafte Ausgestaltungen der vorliegenden Erfindung sind Gegenstand der abhängigen Ansprüche.

Bei dem erfindungsgemäßen Verfahren wird eine erste Bedienhandlung zur Auswahl einer Funktion eines Bedienelemente mittels eine Spracheingabe, einer Geste und/oder einem Blick bewirkt. Ein Nutzer kann durch eine Spracheingabe auswählen, welche Fahrzeugkomponente mit dem Bedienelement eingestellt werden soll. Beispielsweise sagt ein Nutzer "Rückenlehne rechter Vordersitz", worauf mit dem Bedienelement eine zweite Bedienhandlung zur Einstellung der Rückenlehne des rechten Fahrersitzes erfolgen kann. Demgegenüber ist nach einer Spracheingabe "Sitzhöhe linker Vordersitz" mit demselben Bedienelement die Sitzhöhe des rechten Fahrersitzes verstellbar. Das Bedienelement ist beispielsweise mit einem Finger in zwei Richtungen bedienbar und als Drehwalze, Schieberegler, Schaltwippe, Touchpad oder -display ausgeführt. Alternativ können auch 4- oder Mehrwegschalter zur Bedienung von Funktionselementen in mehreren Ebenen verwendet werden. Die erste Bedienhandlung als Spracheingabe kann erfindungsgemäß auch mit einer Zeigegeste kombiniert werden, beispielsweise sagt der Fahrer "Sitz längsverstellen" und zeigt mit einem Finger oder richtet seinem Blick auf den rechten Fahrzeugsitz. Mit einem Blick ist eine Blickgeste umfasst, bei der die Blickrichtung auf eine Fahrzeugkomponente gerichtet wird. Mit dem Bedienelement kann anschließende der rechte Fahrzeugsitz in oder gegen die Fahrtrichtung verschoben werden. Beispielsweise wird durch Drehen einer Drehwalze in oder gegen die Fahrtrichtung der Sitz in dementsprechende Richtung verschoben, Die Sitzverschiebung kann durch eine manuelle Betätigung der Drehwalze sehr fein justiert werden. Idealerweise ist das Bedienelement wie die Drehwalze an einer vom Fahrzeugnutzer gut zugänglichen Stelle angeordnet, die eine Bedienung ohne Blickabwendung vom Fahrgeschehen ermöglicht, beispielsweise am Lenkrad oder an einem Zierteil des Fahrzeugs. In einer weiteren Ausführungsform wird die erste Bedienhandlung ausschließlich mittels einer Geste ausgeführt. Beispielsweise zeigt ein Fahrzeugnutzer auf eine Fahrzeugkomponente, beispielsweise das Schiebedach, und kann dann mit dem Bedienelement das Schiebedach öffnen oder schließen. In vorteilhafter Weise ermöglicht das Verfahren ohne Ablenkung vom Fahrgeschehen eine manuelle Verstellung einer Vielzahl von Fahrzeugkomponenten mit einem einzigen Bedienelement.

Erfindungsgemäß wird bei dem Verfahren eine Position im Fahrzeug, von der die erste Bedienhandlung ausgeht, bestimmt und mit der zweiten Bedienhandlung eine dieser Position zugeordnete Fahrzeugkomponente eingestellt. Mit anderen Worten wird ermittelt, wo der die Spracheingabe , die Geste und/oder den Blick tätigende Fahrzeugnutzer im Fahrzeug sitzt, beispielsweise auf dem Fahrer- oder Beifahrersitz. Lautet eine Spracheingabe beispielsweise "Kopfstütze verstellen" und wird bestimmt, dass der die Spracheingabe tätigende Nutzer auf dem Beifahrersitz sitzt, dann wird mit der manuellen Betätigung des Bedienelements die Kopfstütze des Fahrersitzes verstellt. Eine der Sitzposition zugeordnete Fahrzeugkomponente ist neben dem Sitz beispielsweise ein Display, eine Lüftungsdüse, eine Fahrzeugtür oder Seitenscheibe etc. Durch die Bestimmung der Position, von der die erste Bedienhandlung im Fahrzeug ausgeht, kann in vorteilhafter Weise ohne Vorgabe der Position durch Sprache oder Geste festgestellt werden, welche der an jedem Sitzplatz vorhandene Fahrzeugkomponente durch die zweite, manuelle Bedienhandlung am Bedienelement eingestellt werden soll.

Gemäß einer Ausgestaltung der vorliegenden Erfindung wird zusätzlich zur Position, von der eine Spracheingabe und/oder Geste ausgeht, bestimmt, von welcher Position im Fahrzeug die zweite Bedienhandlung ausgeht. Ist bekannt, ob der Fahrer oder der Beifahrer das Bedienelement bedient, so kann dementsprechend beispielsweise der Fahrer- oder Beifahrersitz mit dem Bedienelement eingestellt werden. Wird zusätzlich zur Position von der die Spracheingabe und/oder Geste erfolgt die Position von der im Fahrzeug die zweite Bedienhandlung ausgeht bestimmt, so können die Positionen von der die erste und zweite Bedienhandlung ausgehen gegeneinander plausibilisiert werden, wodurch das Verfahren an Zuverlässigkeit gewinnt. Stimmen beide Positionen überein, so kann mit hoher Zuverlässigkeit bestimmt werden, welche Fahrzeugkomponente eingestellt werden soll. Stimmen die beiden Positionen nicht überein, so ist eine fehlerhafte Erkennung wahrscheinlich. An den Fahrzeugnutzer wird dann eine Information übermittelt, dass eine Erkennung der einzustellenden Fahrzeugkomponente fehlgeschlagen ist.

Gemäß einer weiteren Ausgestaltung der vorliegenden Erfindung wird die durch die erste Bedienhandlung ausgewählte Funktion durch eine sprachliche, grafische oder haptische Rückmeldung bestätigt. An den Nutzer wird eine Information übermittelt, welche Fahrzeugkomponente durch manuelle Betätigung des Bedienelements verstellt wird. Der Nutzer erhält durch die Rückmeldung eine Bestätigung, dass seine durch die erste Bedienhandlung getätigte Eingabe richtig verstanden wurde und mit dem Bedienelement die gewünschte Fahrzeugkomponente einstellbar ist.

Gemäß einer weiteren Ausgestaltung der vorliegenden Erfindung wird die manuell durchgeführte Bedienhandlung der Fahrzeugkomponente unter einer Kennung abgespeichert. Die Kennung bezeichnet beispielsweise ein Profil eines Fahrzeugnutzers, wobei die Einstellung in dem Profil gespeichert wird. Die Speicherung erfolgt beispielsweise durch eine Spracheingabe des Nutzers. Im Falle einer selbstständigen Erkennung des Nutzers durch das Fahrzeug, beispielswiese mittels biometrischer Daten, reicht ein Sprachbefehl wie "speichern" aus, andernfalls ist die Kennung zu nennen unter der die Einstellung gespeichert werden soll.

Gemäß einer weiteren Ausgestaltung der vorliegenden Erfindung ist die gespeicherte Einstellung durch sprachliche Angabe der Kennung von in innerhalb oder außerhalb des Fahrzeugs aufrufbar.

Gemäß einer weiteren Ausgestaltung der vorliegenden Erfindung bewirkt nach der ersten Bedienhandlung eine manuell durchgeführte zweite Bedienhandlung eine Einstellung eines Fahrzeugsitzes, eines Fahrzeugspiegels, eines Schiebedaches, eines Entertainmentsystems, eine Lenkrads oder eine Betätigung einer Fahrzeugscheibe. Die nicht abschließende Aufzählung zeigt die Vielfalt der Fahrzeugkomponenten, die in vorteilhafter Weise nach vorliegendem Verfahren mit einem Bedienelement bedienbar sind.

Gemäß einer weiteren Ausgestaltung der vorliegenden Erfindung wird die die ausgewählte Funktion des Bedienelements nach Ablauf einer vorgegebenen Zeitdauer ohne Nutzereingabe aufgehoben. Erfolgt in der vorgegebenen Zeitdauer keine oder keine weitere Betätigung des Bedienelementes oder keine Spracheingabe, so wird das Bedienelement funktionslos geschaltet oder weist eine Grundfunktion zur Bedienung eines der oben genannten Fahrzeugkomponenten auf. Das Rücksetzen der Funktion des Bedienelementes auf definierte Funktion verhindert eine Fehlbedienung. Alternativ kann der Bediener ebenso durch eine Bedienhandlung die Funktion aufheben, beispielsweise mittels eines Sprachbefehls wie "Einstellung fertig" oder einer angemessen gesonderten Bedienung des Bedienelements wie z.B. eine Mehrfinger-Geste auf einem Touch-Feld.

Erfindungsgemäß wird eine Vorrichtung zur Durchführung des vorab beschriebenen Verfahrens vorgeschlagen mit:
einem Bedienelement,
einer Einrichtung, mittels der eine Funktion des Bedienelements auswählbar ist,
einem mit dem Bedienelement verbundenen Steuergerät zum Empfang der mittels der Einrichtung ausgewählten Funktion des Bedienelements und
Aktoren zur Einstellung von Fahrzeugkomponenten, die von dem Steuergerät in Abhängigkeit der ausgewählten Funktion und einer Betätigung des Bedienelements ansteuerbar sind,
wobei die Einrichtung zur Auswahl der Funktion des Bedienelements ein Mikrofon zur Erfassung einer Spracheingabe und/oder eine Kamera zur Erfassung einer Geste und/oder einer Blickrichtung umfasst.

Die Vorrichtung ermöglicht mit einem einzigen Schaltelement eine Vielzahl von Fahrzeugkomponenten ohne Ablenkung vom Fahrgeschehen zu bedienen.

Die vorliegende Erfindung wird nachstehend anhand von Ausführungsbeispielen unter Bezugnahme auf die beiliegende Zeichnung näher erläutert.

Es zeigt:
- Fig. 1: eine schematische Darstellung einer Vorrichtung zur Durchführung des erfindungsgemäßen Verfahrens und
- Fig. 2: Ablaufdiagramm des Verfahrens.

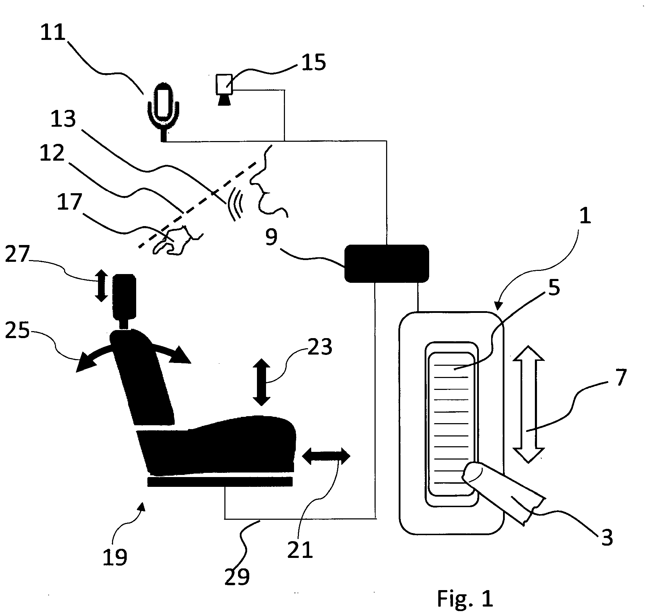

In der Fig. 1 ist ein Bedienelement 1 gezeigt, das ein von einem Finger 3 betätigbares Walzenelement 5 umfasst. Das Walzenelement 5 kann mit dem Finger 3 gemäß Pfeil 7 in zwei Richtungen gedreht werden.

Das Bedienelement 1 ist mit einem Steuergerät 9 verbunden. Das Steuergerät 9 ist mit einem Mikrofon 11 zur Spracheingabe 13 und einer Kamera 15 zur Erkennung einer Geste verbundenen. Des Weiteren ist das Steuergerät 9 mit einem Fahrzeugsitz 19 verbunden und zur Ansteuerung von nicht dargestellten Aktoren zur Sitzverstellung eingerichtet. Das Steuergerät 9 ist im Einzelnen eingerichtet zur Ansteuerung von Aktoren zur Sitzlängsverstellung 21, zur Sitzhöhenverstellung 23, zur Verstellung der Neigung der Sitzlehne 25 und zur Kopfstützenhöhenverstellung 27. Die Steuersignale werden von dem Steuergerät 9 beispielsweise über einen Datenbus 29 an ein nicht gezeigtes Sitzsteuergerät übermittelt, mittels dem die einzelnen Aktoren zur Sitzverstellung angesteuert werden können. Das Steuergerät 9 kann dabei zumindest teilweise in dem Bedienelement 1 integriert sein.

In einer Grundeinstellung ist dem Bedienelement 1 beispielsweise keine Funktion zugeordnet, d.h. durch Drehen des Walzenelements 5 wird in diesem Zustand keine Verstellung des Sitzes 19 und keiner anderen Fahrzeugkomponente bewirkt.

Formuliert der Fahrzeugnutzer eine Spracheingabe 13, wird diese vom Mikrofon 11 empfangen und an das Steuergerät 9 übermittelt. Im Steuergerät 9 wird die Spracheingabe 13 analysiert und interpretiert. Entsprechend dem inhaltlich verstandenen Sprachbefehl 13 wird dem Bedienelement 1 eine Funktion zugeordnet, d.h. mit anderen Worten ein von dem Bedienelement 1 an das Steuergerät übermitteltes Signal wird entsprechend dem inhaltlich verstandenen Sprachbefehl umgesetzt. Lautet der Sprachbefehl 13 beispielsweise "Sitzhöhe verstellen", dann wird ein durch Betätigung des Walzenelements an das Steuergerät 9 übermitteltes Signal empfangen und über den Datenbus 29 und das Sitzsteuergerät an einen Aktor zur Sitzhöhenverstellung 23 übermittelt. Gleichermaßen wird nach Übermittlung eines Sprachbefehls 13 wie "Sitzlängsverstellung" 21, "Neigung der Sitzlehen" 25 oder "Kopfstützenhöhenverstellung" 27 an das Steuergerät 9 ein durch die Betätigung des Bedienelements 1 erzeugtes Signal über den Datenbus 29 und das Sitzsteuergerät an entsprechende Aktoren übermittelt.

In einer alternativen, nicht dargestellten Ausführungsform werden die Daten vom Steuergerät 9 nicht über einen Datenbus 29 sondern über einzelne Leitungen direkt an die Aktoren übermittelt.

Um sicherzustellen, dass auch der Sitz des die Spracheingabe 13 tätigenden Nutzers eingestellt wird, wird ermittelt von welcher Position, d.h. von welchem Sitz aus die Spracheingabe 13 erfolgt. Hierzu sind mehrere Mikrofone im Innenraum angeordnet, aufgrund unterschiedlicher Distanzen der Mikrofone zu dem Nutzer geben diese in Reaktion auf die Spracheingabe 13 zeitversetzte elektrische Signale ab, aus denen sich die Position des Nutzers im Fahrzeug bestimmen lässt. Alternativ oder zusätzlich lässt sich auch durch Kamerabilder die Position eines sprechenden Nutzers bestimmen, etwa durch die Auswertung von Bildern der Insassen bezüglich Bewegung der Lippen. Ist die Position des Nutzers bekannt, dann wird entsprechend der Spracheingabe die dem Nutzer zughörige Fahrzeugkomponente eingestellt. Ist bestimmt, dass der die Spracheingabe tätigende Nutzer auf dem Beifahrersitz positioniert ist, wird in Reaktion auf die Eingabe "Sitzlängsverstellung", mit Betätigung des Bedienelements 1 der Beifahrersitz eingestellt. Alternativ oder zusätzlich wird die Position des Nutzers anhand der Richtung, von der aus das Bedienelement 1 bedient wird, bestimmt. Entspricht in der Darstellung nach Fig. 1 die Fahrtrichtung der Pfeilrichtung 7, dann wird das Bedienelement 1 wie dargestellt mit dem Finger 3 von rechts, d.h. von der Beifahrerseite aus bedient. Dementsprechend wird mit Betätigung des Bedienelements 1 folgend auf eine Spracheingabe wie beispielsweise "Neigung der Sitzlehne" die Neigung 25 eingestellt.

Neben der Spracheingabe 13 kann auch mit einer Geste 17 oder einer Blickgeste 12 allein, aber auch mit einer Spracheingabe 13 in Kombination mit einer Geste 17 und/oder einer Blickgeste 12 dem Bedienelement 1 eine Funktion zugeordnet werden.

Zeigt der Fahrzeugnutzer auf eine einzustellende Fahrzeugkomponente, so wird das von der Kamera aufgenommene Bild des Innenraums und der Geste 17 an das Steuergerät 9 übermittelt. Das Steuergerät 9 ermittelt aus dem Bild die einzustellende Fahrzeugkomponente, beispielsweise die durch die Geste 17 bestimmte Kopfstütze 17. Dementsprechend wird dem Bedienelement 1 die Funktion der Kopfstützensteuerung zugeordnet, d.h. das Steuergerät 9 setzt die durch Betätigung des Bedienelements 1 erzeugten Signale derart um, dass die durch die Geste 17 ausgewählte Fahrzeugkomponente, d.h. die Kopfstütze eingestellt wird.

Eine Kombination einer Spracheingabe 13 mit einer Geste 17 und/oder einer Blickgeste 12_ eignet sich insbesondere, wenn durch die Geste 13 aufgrund einer systembedingten begrenzten Erkennungsmöglichkeit nur eine übergeordnete Fahrzeugkomponente wie ein Fahrzeugsitz und nicht die einzustellende Komponente selbst auswählbar ist. In vorliegendem Beispiel wäre durch die Geste 17 lediglich ein rechter oder linker Fahrzeugsitz insgesamt auswählbar, die einzustellende spezifische Fahrzeugkomponente des Fahrzeugsitzes erfolgt dann über eine Spracheingabe 13 wie beispielsweise "Kopfstütze". Das Steuergerät 9 ermittelt aus Geste 17 und Spracheingabe 13 die einzustellende Fahrzeugkomponente, durch eine Betätigung des Bedienelements 1 wird eine Verstellung der ermittelten Fahrzeugkomponente bewirkt.

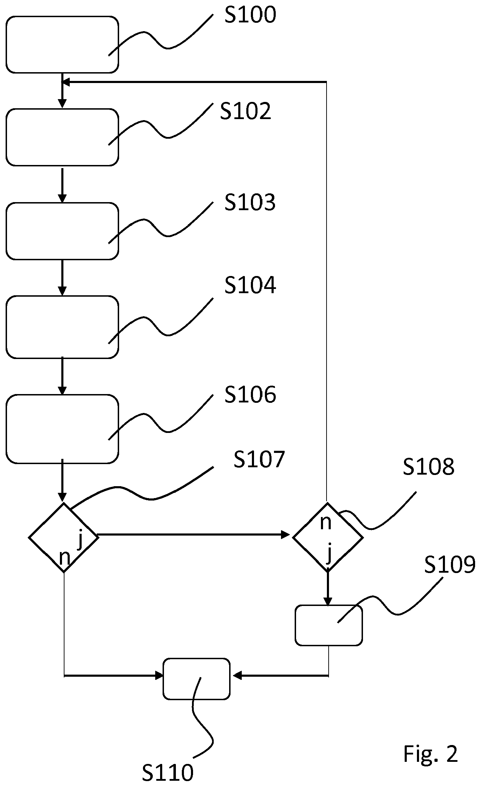

Das in Fig. 2 gezeigte Ablaufdiagramm beschreibt eine Ausführungsform des erfindungsgemäßen Verfahrens zur Verstellung einer oder mehrerer Fahrzeugkomponenten mit einem einzigen Bedienelement auf Basis einer Spracheingabe 13. Im Schritt S100 bestimmt ein Fahrzeugnutzer mit einer Spracheingabe 13 eine einzustellende Fahrzeugkomponente, beispielsweise mit der Äußerung "Kopfstütze". Die von einem Mikrofon übermittelte Äußerung wird im Schritt S102 von einem Spracherkennungssystem in einem Steuergerät 9 empfangen und der Inhalt der Äußerung wird bestimmt. Im Schritt 103 wird die Position des Nutzers im Fahrzeug ermittelt. Beispielsweise wird bestimmt, dass der Nutzer auf dem Fahrersitz sitzt. In einem Schritt S104 wird dem Nutzer über ein Display angezeigt, dass seine Spracheingabe 13 verstanden wurde und für das Bedienelement 1 aus Fig. 1 die mit der Spracheingabe übermittelte und der Position des Nutzers zugeordnete Funktion ausgewählt ist. Ist die einzustellende Fahrzeugkomponente wie beispielsweise das Schiebedach keiner Position im Fahrzeug, d.h. keinem Sitzplatz zugeordnet, dann wird der Schritt S103 übersprungen.

Dem Bedienelement 1 wird in vorliegendem Beispiel durch das Steuergerät 9 die Funktion "Einstellung der Höhe der linken Kopfstütze" zugewiesen. Im Schritt S106 betätig der Fahrzeugnutzer das Bedienelement 1, die durch die Bedienung erzeugten Signale bewirken dann eine Verstellung der Kopfstütze. Hierzu werden die erzeugten Signale vom Steuergerät 9 empfangen und an einen Aktor zur Verstellung der Kopfstütze übermittelt. Eine Betätigung des Walzenelements 5 entgegen der Fahrrichtung bewirkt ein Einfahren, eine Betätigung in Fahrtrichtung ein Ausfahren der Kopfstütze.

Im Schritt S107 wird überprüft, ob innerhalb einer vorgegebenen Zeitdauer eine weitere Spracheingabe oder Betätigung des Bedienelements erfolgt. Findet eine Spracheingabe vor Ablauf der vorgegebenen Zeitdauer statt, so wird im Schritt S108 geprüft, ob die erneute Spracheingabe eine Speicherung der vorgenommen Einstellung in einem Profil durch Nennung einer Kennung betrifft oder eine neue Fahrzeugkomponente betrifft. Betrifft die Spracheingabe eine Speicherung, so wird die Einstellung im Schritt S109 gespeichert und das Verfahren im Schritt S110 beendet. Betrifft die Eingabe eine neue Fahrzeugkomponente wie beispielsweise "Spiegel", dann wird das Verfahren im Schritt erneut S102 fortgesetzt.

Nach der Speicherung des Profils in S109, nach Ausbleiben einer Betätigung des Bedienelements 1 oder einer erneuten Spracheingabe innerhalb einer vorgegebenen Zeitdauer in S107 wird im Schritt 110 die dem Bedienelement durch die Spracheingabe 13 in S100 oder S108 zugeordnete Funktion aufgehoben, wodurch das Bedienelement 1 entweder keine Funktion oder eine Defaultfunktion, also beispielsweise eine Lautstärkeeinstellungsvorrichtung eines Entertainmentsystems aufweist. Dem Nutzer wird über das Display angezeigt, dass vorab mit der Spracheingabe ausgewählte Funktion nicht mehr aktiv ist.

## Patentansprüche

1. Verfahren zur Einstellung einer Fahrzeugkomponente mit folgenden Schritten:
Auswahl einer Funktion eines Bedienelements durch eine erste Bedienhandlung (S100),
Einstellung der Fahrzeugkomponente durch eine zweite, am Bedienelement manuell durchgeführte Bedienhandlung (106), wobei
die erste Bedienhandlung (S100) mittels einer Spracheingabe, einer Geste und/oder einem Blick bewirkt wird,
**dadurch gekennzeichnet, dass**
eine Position im Fahrzeug, von der die erste Bedienhandlung ausgeht, bestimmt und
mit der zweiten Bedienhandlung eine dieser Position zugeordnete Fahrzeugkomponente eingestellt wird.

2. Verfahren nach Anspruch 1,
**dadurch gekennzeichnet, dass**
eine Position im Fahrzeug, von der die zweite Bedienhandlung ausgeht bestimmt und mit der Position der ersten Bedienhandlung plausibilisert wird.

3. Verfahren nach einem der Anspruch 1 bis 2,
**dadurch gekennzeichnet, dass**
die durch die erste Bedienhandlung ausgewählte Funktion durch eine sprachliche, grafische oder haptische Rückmeldung bestätigt wird.

4. Verfahren nach einem der Ansprüche 1 bis 3,
**dadurch gekennzeichnet, dass**
die Einstellung der durch die zweite, am Bedienelement manuell durchgeführte Bedienhandlung der Fahrzeugkomponente unter einer Kennung abgespeichert wird.

5. Verfahren nach Anspruch 4,
**dadurch gekennzeichnet, dass**
die gespeicherte Einstellung durch sprachliche Angabe der Kennung von in innerhalb oder außerhalb des Fahrzeugs aufrufbar ist.

6. Verfahren nach einem der Ansprüche 1 bis 5,
**dadurch gekennzeichnet, dass**
eine zweite, am Bedienelement manuell durchgeführte Bedienhandlung eine Einstellung mindestens einer der folgenden Fahrzeugkomponenten bewirkt:
- ein Fahrzeugsitz,
- ein Fahrzeugspiegel,
- ein Fahrzeugscheibe,
- ein Schiebdach,
- ein Entertainmentsystem,
- ein Lenkrad.

7. Verfahren nach einem der Ansprüche 1 bis 6,
**dadurch gekennzeichnet, dass**
die ausgewählte Funktion des Bedienelements nach Ablauf einer vorgegebenen Zeitdauer ohne Nutzereingabe aufgehoben wird.

8. Vorrichtung zur Durchführung des Verfahrens nach einem der vorangehenden Ansprüche mit:
einem Bedienelement (1),
einer Einrichtung (11, 15) mittels der eine Funktion des Bedienelements (1) auswählbar ist,
einem mit dem Bedienelement (1) verbundenen Steuergerät (9), eingerichtet zum Empfang der mittels der Einrichtung (11, 15) ausgewählten Funktion des Bedienelements (1), und
Aktoren zur Einstellung von Fahrzeugkomponenten, die von dem Steuergerät (9) in Abhängigkeit der ausgewählten Funktion und einer Betätigung des Bedienelements (1) ansteuerbar sind, wobei die Einrichtung zur Auswahl der Funktion des Bedienelements (1) ein Mikrofon (11) zur Erfassung einer Spracheingabe (13) und/oder eine Kamera (15) ist,
**dadurch gekennzeichnet, dass**
die Vorrichtung ferner Mittel umfasst, die dazu eingerichtet sind, die Position im Fahrzeug zu bestimmen, von der eine Bedienhandlung zur Auswahl der Funktion ausgeht, und die Vorrichtung dazu eingerichtet ist, eine dieser Position zugeordnete Fahrzeugkomponente einzustellen.

## Claims

1. Method for adjusting a vehicle component, comprising the following steps:
selecting a function of a control by a first operator action (S100),
adjusting the vehicle component by a second operator action (S106) performed manually at the control, wherein the first operator action (S100) is effected by means of a voice input, a gesture and/or a glance,
**characterised in that**
a position in the vehicle from which the first operator action comes is determined and
a vehicle component assigned to said position is adjusted with the second operator action.

2. Method according to claim 1,
**characterised in that**
a position in the vehicle from which the second operator action comes is determined and plausibility-checked with the first operator action.

3. Method according to claim 1 or 2,
**characterised in that**
the function selected by the first operator action is acknowledged by a verbal, graphical or haptic feedback.

4. Method according to any of claims 1 to 3,
**characterised in that**
the adjustment of the vehicle performed manually by the second operator action at the control is stored under an identifier.

5. Method according to claim 4,
**characterised in that**
the stored adjustment can be invoked by verbal declaration of the identifier within or outside the vehicle.

6. Method according to any of claims 1 to 5,
**characterised in that**
a second operator action performed manually at the control causes an adjustment of at least one of the following vehicle components:
- a vehicle seat,
- a vehicle mirror,
- a vehicle window,
- a sun roof,
- an entertainment system,
- a steering wheel.

7. Method according to any of claims 1 to 6,
**characterised in that**
the selected function of the control is cancelled on the expiry of a predetermined time span without user input.

8. Device for carrying out the method according to any of the preceding claims, comprising:
a control (1),
a device (11, 15) by means of which a function of the control (1) can be selected,
a control unit (9) connected to the control (1), arranged to receive the function of the control (1) selected by means of the device (11, 15), and
actuators for adjusting vehicle components, which actuators can be activated by the control unit (9) depending on the selected function and an operation of the control (1), wherein the device for selecting the function of the control (1) is a microphone (11) for detecting a voice input (13) and/or a camera (15),
**characterised in that**
the device further comprises means arranged to determine the position in the vehicle from which an operator action for selecting the function comes, and the device is arranged to adjust a vehicle component assigned to said position.

## Revendications

1. Procédé de réglage d'un composant de véhicule comprenant les étapes suivantes :
sélection d'une fonction d'un élément de commande par une première action de commande (S100),
réglage du composant de véhicule par une seconde action de commande (106) effectuée manuellement sur l'élément de commande, la première action de commande (S100) étant effectuée au moyen d'une entrée vocale, d'un geste et/ou un regard,
**caractérisé en ce qu'**une position dans le véhicule à partir de laquelle sort et est déterminée la première action de commande et au moyen de la seconde action de commande est réglé un composant de véhicule associé à cette position.

2. Procédé selon la revendication 1, **caractérisé en ce qu'**une position dans le véhicule à partir de laquelle sort et est déterminée la seconde action de commande et est rendue plausible par la position de la première action de commande.

3. Procédé selon l'une quelconque des revendications 1 à 2, **caractérisé en ce que** la fonction sélectionnée par la première action de commande est confirmée par un message de retour vocal, graphique ou haptique.

4. Procédé selon l'une quelconque des revendications 1 à 3, **caractérisé en ce que** le réglage de l'action de commande effectuée manuellement sur l'élément de commande du composant de véhicule est enregistrée sous une désignation.

5. Procédé selon la revendication 4, **caractérisé en ce que** le réglage enregistré peut être interrogé par une indication vocale de la désignation depuis l'intérieur ou l'extérieur du véhicule automobile.

6. Procédé selon l'une quelconque des revendications 1 à 5, **caractérisé en ce qu'**une seconde action de commande effectuée manuellement sur l'élément de commande provoque un réglage d'un des éléments de véhicule suivants :
- un siège de véhicule,
- un rétroviseur de véhicule,
- une vitre de véhicule,
- un toit ouvrant
- un système de divertissement,
- un volant.

7. Procédé selon l'une quelconque des revendications 1 à 6, **caractérisé en ce que** la fonction sélectionnée de l'élément de commande est supprimée une fois qu'une durée prédéfinie est découlée sans entrée de la part de l'utilisateur.

8. Dispositif d'exécution du procédé selon l'une quelconque des revendications précédentes, comprenant :
un élément de commande (1),
un dispositif (11, 15) au moyen duquel une fonction de l'élément de commande (1) peut être sélectionnée,
un appareil de commande (9) relié à l'élément de commande (1) qui est conçu pour recevoir la fonction de l'élément de commande (1) sélectionnée au moyen du dispositif (11, 15) et
des actionneurs pour régler les composants de véhicule qui peuvent être commandés par l'appareil de commande (9) en fonction de la fonction sélectionnée et d'une confirmation de l'élément de commande (1), dans lequel le dispositif destiné à sélectionner la fonction de l'élément de commande (1 ) est un microphone (11) destiné à détecter une entrée vocale (13) et/ou une caméra (15), **caractérisé en ce que** le dispositif comprend en outre des moyens qui sont conçus pour déterminer la position dans le véhicule à partir de laquelle sort une action de commande pour sélectionner la fonction, et le dispositif est conçu pour régler un composant de véhicule associé à cette position.
